# FASCICULE DE BREVET EUROPEEN

(11) **EP 3 722 559 B1**
(45) Date de publication et mention de la délivrance du brevet: **25.01.2023**
(21) Numéro de dépôt: 20168813.2
(22) Date de dépôt: 08.04.2020
(51) Int. Cl.: F01D 9/06, F01D 11/24, F02C 6/08, F02C 7/18, F02C 9/18, F02K 3/06

(54) **TURBOMACHINE POUR UN AÉRONEF**
TURBOTRIEBWERK FÜR LUFTFAHRZEUG
TURBINE ENGINE FOR AN AIRCRAFT

(30) Priorité: 09.04.2019 FR 1903798
(43) Date de publication de la demande: 14.10.2020
(73) Titulaire: SAFRAN AIRCRAFT ENGINES, 75015 Paris (FR)
(72) Inventeur: DE CARNE-CARNAVALET, Vincent, Marie, Jacques, Rémi, 77550 MOISSY-CRAMAYEL (FR); LAHAYE, Guillaume, Jean, Pierre, 77550 MOISSY-CRAMAYEL (FR)
(74) Mandataire: Gevers & Orès

(56) Documents cités:
- EP-A1- 0 743 434
- EP-A2- 0 469 825
- EP-A2- 2 236 772
- FR-A1- 3 057 615

## Description

### Domaine technique de l'invention

La présente invention se rapporte au domaine de l'aéronautique, et plus particulièrement à une turbomachine pour un aéronef.

### Arrière-plan technique

L'état de la technique comprend notamment les documents EP-A2-0 469 825, FR-A1-3 057 615, EP-A1-0 743 434 et EP-A2-2 236 772.

Une turbomachine pour aéronef comprend généralement, d'amont en aval dans le sens de l'écoulement des gaz, une ou plusieurs soufflantes puis une partie moteur comprenant un ou plusieurs étages de compresseur, par exemple un compresseur basse pression, BP, et un compresseur haute pression, HP, une chambre de combustion, un ou plusieurs étages de turbine, par exemple une turbine haute pression HP, et une turbine basse pression BP, et une tuyère d'échappement des gaz. A chaque compresseur peut correspondre une turbine, les deux étant reliés par un arbre, formant ainsi, par exemple, un corps haute-pression HP, et un corps basse pression BP.

Les compresseurs comprennent des rotors comportant des aubes destinées respectivement à comprimer l'air avant son introduction dans la chambre de combustion. De même, les rotors des turbines comportent des aubes destinées à être entraînées par les gaz de combustion produit par ladite chambre de combustion afin d'entraîner en rotation lesdits rotors. Tous les rotors sont montés tournants dans des carters annulaires qui sont assemblés axialement les uns à la suite des autres de manière à former un carter global de flux primaire de la turbomachine.

Le flux d'air passant autour de ce carter global de flux primaire, c'est-à-dire autour de la partie moteur de la turbomachine est appelé flux secondaire et est guidé par une veine d'écoulement de flux secondaire.

Il est connu de prélever de l'air de la turbomachine, par exemple dans la veine d'écoulement de flux secondaire, afin d'alimenter aussi bien des systèmes de l'aéronef, notamment pour refroidir de l'air allant d'un compresseur de la turbomachine jusqu'à l'aéronef, que des systèmes de la turbomachine, en particulier pour refroidir le carter annulaire de turbine dans le but de gérer les jeux entre ce carter et un rotor de turbine.

Afin de récupérer ces débits d'air à la bonne pression, des écopes sont installées dans la veine d'écoulement de flux secondaire. Ces écopes peuvent être affleurantes, c'est-à-dire qu'elles consistent en une simple ouverture dans la surface de la veine d'écoulement de flux secondaire, ou dynamiques, c'est-à-dire qu'elles sont intrusives dans l'écoulement de la veine d'écoulement de flux secondaire, avec un système de capot pour récupérer de la dynamique de l'air. Dans tous les cas, ces écopes sont munies de vannes qui permettent de réguler le débit d'air pour le système correspondant, voire de couper le débit complètement.

D'un point de vue aérodynamique, l'idéal est d'avoir une veine d'écoulement de flux secondaire aussi lisse que possible. Or, ces écopes, qu'elles soient affleurantes ou dynamiques, débitantes ou fermées, sont des sources de pertes de pression totale dans la veine d'écoulement de flux secondaire, ce qui aboutit directement à une augmentation de la consommation de carburant du moteur.

En outre, ces écopes peuvent être la source de remontées de pression potentielle de la veine d'écoulement de flux secondaire jusqu'à la soufflante, ce qui est une source d'excitation aéroélastique, de nuisances acoustiques et est la source d'une diminution du rendement moyen de la soufflante ainsi que d'une réduction de la marge au pompage.

Également, sans que cela résulte d'une interaction entre une distorsion de pression statique et la soufflante, ces écopes peuvent être à l'origine de nuisances acoustiques supplémentaires par résonance de la cavité formée par l'écope. Cette problématique apparait principalement quand le besoin de refroidissement du système de l'aéronef ou de l'ensemble propulsif n'est plus à satisfaire et que l'écope est donc fermée.

Enfin, la multiplication des écopes et des conduits associés augmentent la difficulté d'intégration ainsi que le nombre de pièces à fabriquer et monter sur le moteur. Il y a donc un impact de masse et de coûts de production associé à l'optimisation de ces différents systèmes.

La présente invention a notamment pour but de résoudre tout ou partie des problèmes précités.

### Résumé de l'invention

L'invention propose à cet effet une turbomachine pour un aéronef, comportant un dispositif d'alimentation en air comprimé configuré pour fournir de l'air comprimé audit aéronef, un système de refroidissement de l'air comprimé fourni à l'aéronef, ce système de refroidissement comportant une écope de prélèvement d'air dans une veine d'écoulement d'un flux secondaire, et un système de gestion de diamètre d'un carter de turbine, ce système étant alimenté en air prélevé dans ladite veine et étant configuré pour maîtriser des jeux radiaux entre ce carter et des sommets d'aubes de rotor de turbine. Selon l'invention, ledit système de gestion est alimenté en air par ladite écope du système de refroidissement.

Ainsi, l'invention permet de réduire le nombre d'écopes en proposant une unique écope pour satisfaire les besoins de plusieurs systèmes, en particulier un système de refroidissement et un système de gestion. L'invention permet ainsi de réduire l'intrusion globale des écopes dans la veine d'écoulement de flux secondaire. Cela entraine donc une réduction de la perturbation de l'écoulement dans la veine d'écoulement de flux secondaire.

En outre, l'écope unique est notamment toujours débitante, soit pour le système de l'aéronef soit pour le système de la turbomachine, ce qui limite les problématiques de résonance acoustique de l'écope qui interviennent lorsque l'écope est fermée.

Une optimisation de la forme de cette écope unique permettrait également d'alimenter les systèmes avec une performance augmentée (permettant potentiellement à leur tour d'être mieux dimensionnés pour réaliser la même fonction).

De plus la turbomachine selon l'invention comprend les caractéristiques suivantes:
- ladite écope est située sur un bras tubulaire de passage de servitudes d'un carter intermédiaire,
- l'écope est reliée par une dérivation à deux canalisations d'alimentation respectives du système de gestion et du système de refroidissement, cette dérivation étant située dans ledit bras.

La turbomachine selon l'invention peut comprendre une ou plusieurs des caractéristiques ci-dessous:
- ledit bras est situé en aval d'une rangée annulaire de redresseurs du flux secondaire, ces redresseurs étant situés en aval d'une soufflante,
- des bords d'attaque des redresseurs et un bord d'attaque du bras sont sensiblement situés dans un même plan perpendiculaire à un axe longitudinal de la turbomachine,
- l'écope est située à une jonction entre ledit bras et une paroi annulaire interne définissant une face interne de ladite veine,
- ladite paroi annulaire interne comprend au moins une grille de sortie d'air de décharge d'un compresseur,
- ladite au moins une grille est située en amont de ladite écope par référence à l'écoulement du flux secondaire.

Un exemple peut également concerner un ensemble propulsif comportant une turbomachine telle que décrite ci-dessus ainsi qu'une nacelle, ledit dispositif d'alimentation étant localisé dans cette nacelle.

### Brève description des figures

L'invention sera mieux comprise et d'autres détails, caractéristiques et avantages de l'invention apparaîtront plus clairement à la lecture de la description suivante faite à titre d'exemple non limitatif et en référence au dessin annexé dans lequel :

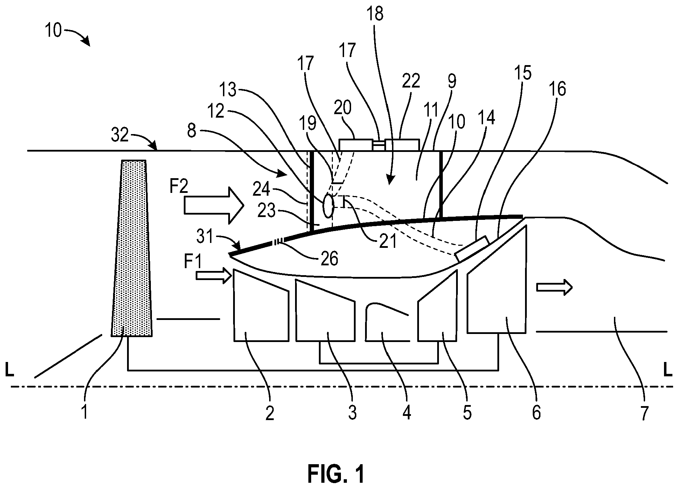

[Fig.1] la figure 1 est une vue schématique partielle en coupe longitudinale d'une turbomachine selon l'invention.

### Description détaillée de l'invention

En référence à la figure 1, une turbomachine à double flux comprend généralement, d'amont en aval dans le sens de l'écoulement des gaz, une ou plusieurs soufflantes 1 puis une partie moteur comprenant un ou plusieurs étages de compresseur, basse pression 2 puis haute pression 3, une chambre de combustion 4, un ou plusieurs étages de turbine, haute pression 5 puis basse pression 6, et une tuyère 7 d'échappement des gaz primaires. Des rotors, tournant autour de l'axe longitudinal LL de la turbomachine et pouvant être couplés entre eux par différents systèmes de transmission et d'engrenages, correspondent à ces différents éléments. Les rotors de compresseur sont montés tournants dans des carters annulaires de compresseur. De la même manière, les rotors de turbine sont montés tournant dans des carters annulaires 16 de turbine. Les carters de compresseur et de turbine sont assemblés axialement les uns à la suite des autres de manière à former un carter global.

Ici, le flux d'air entrainé par les soufflantes est séparé en une partie F1 entrant dans le circuit primaire correspondant à la partie moteur, c'est-à-dire à l'intérieur du carter global, et une partie F2 de flux secondaire, participant de manière prépondérante à la poussée fournie par la turbomachine. L'écoulement secondaire F2 passe autour de la partie moteur dans une veine d'écoulement 8 du flux secondaire F2. La veine 8 comprend deux parois annulaires 31, 32 coaxiales par rapport à l'axe longitudinal LL, respectivement interne 31 et externe 32.

Généralement, une turbomachine est équipée d'au moins un système 18 de passage de servitudes telles que des conduits d'air, des conduits d'huiles, des câbles électriques, etc., de façon à ce qu'elles puissent traverser une veine, telle que la veine d'écoulement 8 du flux secondaire F2, en minimisant les perturbations de cet écoulement.

Les servitudes permettent de relier un premier équipement situé radialement à l'intérieur de la veine à un second équipement situé radialement à l'extérieur de la veine (l'expression radialement s'appréciant par rapport à l'axe longitudinal LL de la turbomachine).

Le système 18 de passage de servitudes, représenté sur la figure 1 dans la veine 8, comprend en général un carter intermédiaire présentant deux viroles annulaires et coaxiales, respectivement interne 10 et externe 9.

Ces deux viroles 9, 10, sont reliées par au moins un bras 11 sensiblement radial et tubulaire qui comprend des logements internes de passage des servitudes. Les viroles 9, 10 forment la continuité des parois annulaires interne 31 et externe 32 de la veine 8 au niveau du système 18 de passage de servitudes.

Généralement, le ou les bras 11 du système 18 de passage de servitudes sont profilés et alignés dans le sens de l'écoulement principal du flux d'air dans la veine 8 pour limiter les perturbations de ce flux et diminuer les pertes de charge. Le bras 11 comprend ici un bord d'attaque 13, par lequel le flux secondaire F2 est destiné à entrer en contact avec le bras 11 et qui est donc profilé pour limiter les perturbations provoquées par le flux secondaire F2. La turbomachine 10 comprend en outre un dispositif d'alimentation 22 en air comprimé configuré pour fournir de l'air comprimé à l'aéronef.

Elle comprend également un système de refroidissement 20 destiné à refroidir l'air comprimé fourni à l'aéronef par le dispositif d'alimentation 22. Le système de refroidissement 20 comprend une écope 12 de prélèvement d'air dans la veine d'écoulement 8 du flux secondaire F2. Le système de refroidissement 20 comprend ici une canalisation d'alimentation 17, permettant d'acheminer l'air prélevé par l'écope 12 jusqu'au dispositif d'alimentation 22.

La turbomachine 10 comprend en outre un système de gestion 15 de diamètre du carter 16 de turbine, en particulier de la turbine basse pression 6, configuré pour maîtriser des jeux radiaux entre ce carter 16 et des sommets d'aubes des rotors de turbine, notamment par refroidissement du carter 16.

Selon l'invention, le système 15 de gestion est alimenté en air par l'écope 12 du système de refroidissement 20. Le système 15 de gestion comprend ici une canalisation d'alimentation 14 permettant d'acheminer l'air prélevé par l'écope 12, jusqu'au carter 16 de turbine.

Ainsi, l'invention permet d'utiliser une seule écope 12 dans le but d'alimenter en air de refroidissement à la fois le système de refroidissement 20 et le système de gestion 15.

Les deux canalisations d'alimentation 14, 17 respectives du système de gestion 15 et du système de refroidissement 20 forment une dérivation qui est ici située dans le bras 11. L'écope 12 est notamment située dans le bras 11 de sorte que la dérivation est reliée à l'écope 12 à l'intérieur du bras 11. La canalisation d'alimentation 14 passe ainsi dans le bras 11 et traverse la virole 10 pour amener l'air de refroidissement, prélevé dans le flux secondaire F2, vers le système de gestion 15, afin de réguler le jeu entre le carter 16 de turbine et les aubes des rotors de turbine. De la même manière, la canalisation d'alimentation 17 passe dans le bras 11 et traverse la virole 9, de manière à alimenter en air de refroidissement le système d'alimentation 22 en air comprimé.

Le fait de positionner l'écope 12 et la dérivation dans le bras 11, permet de libérer de l'espace dans la partie moteur de la turbomachine, ce qui est particulièrement avantageux compte tenu du fait que la partie moteur est très encombrée.

L'écope 12 peut être affleurante, c'est-à-dire qu'elle consiste en une simple ouverture dans la surface de la veine 8, ou dynamique, c'est-à-dire qu'elle est intrusive dans l'écoulement de la veine 8, avec un système de capot pour récupérer de la dynamique de l'air. Dans tous les cas, l'écope est munie d'une ou plusieurs vannes qui permettent de réguler le débit d'air pour le système correspondant, voire de couper le débit complètement. Dans l'exemple illustré, l'écope 12 comprend une première vanne 19 située notamment au niveau d'une entrée de la canalisation d'alimentation 17 et permettant de réguler le débit d'air prélevé par l'écope 12 et acheminé par le dispositif de refroidissement 20. Dans cette exemple, l'écope 12 comprend une deuxième vanne 21 située notamment au niveau d'une entrée de la canalisation d'alimentation 14 et permettant de réguler le débit d'air prélevé par l'écope 12 et acheminé par le système de gestion 15. Dans un mode de réalisation non représenté, la turbomachine comprend une vanne de régulation unique, agencée pour réguler à la fois le débit de la canalisation d'alimentation 14 et le débit de la canalisation d'alimentation 17.

L'écope 12 est par exemple située à proximité du bord d'attaque 13 du bras 11. Elle est notamment située à une jonction entre le bras 11 et la paroi annulaire interne 31 définissant une face interne de la veine.

La turbomachine 10 comprend en outre une rangée annulaire de redresseurs 23 (représentés en traits pointillés sur la figure 1) du flux secondaire 8.

Les redresseurs 23 comprennent des bords d'attaque 24 qui sont situés ici, avec le bord d'attaque 13 du bras 11, dans un même plan perpendiculaire à l'axe longitudinal LL de la turbomachine, qui est le plan du dessin de la figure 1.

La paroi annulaire interne 31 comprend au moins une grille 26 de sortie d'air de décharge du ou des compresseurs 2, 3. La grille 26 est située en amont de l'écope 12 par référence à l'écoulement du flux secondaire F2.

## Revendications

1. Turbomachine (10) pour un aéronef, comportant :
- un dispositif d'alimentation (22) en air comprimé configuré pour fournir de l'air comprimé audit aéronef,
- un système de refroidissement (20) de l'air comprimé fourni à l'aéronef, ce système de refroidissement (20) comportant une écope (12) de prélèvement d'air dans une veine d'écoulement (8) d'un flux secondaire (F2), et
- un système de gestion (15) de diamètre d'un carter (16) de turbine, ce système (15) étant alimenté en air prélevé dans ladite veine (8) et étant configuré pour maîtriser des jeux radiaux entre ce carter (16) et des sommets d'aubes de rotor de turbine,
ledit système de gestion (15) étant alimenté en air par ladite écope (12) du système de refroidissement (20), l' écope (12) étant située sur un bras tubulaire (11) de passage de servitudes d'un carter intermédiaire, et reliée par une dérivation à deux canalisations d'alimentation (14, 17) respectives du système de gestion (15) et du système de refroidissement (20), cette dérivation étant située dans ledit bras (11).

2. Turbomachine (10) selon la revendication 1, dans laquelle ledit bras (11) est situé en aval d'une rangée annulaire de redresseurs (23) du flux secondaire (28), ces redresseurs étant situés en aval d'une soufflante (1).

3. Turbomachine (10) selon la revendication 2, dans laquelle des bords d'attaque (24) des redresseurs (23) et un bord d'attaque (13) du bras (11) sont sensiblement situés dans un même plan perpendiculaire à un axe longitudinal (LL) de la turbomachine (10).

4. Turbomachine (10) selon l'une des revendications 1 à 3, dans laquelle l'écope (12) est située à une jonction entre ledit bras (11) et une paroi annulaire interne (31) définissant une face interne de ladite veine (8).

5. Turbomachine (10) selon la revendication 4, dans laquelle ladite paroi annulaire interne (31) comprend au moins une grille (26) de sortie d'air de décharge d'un compresseur.

6. Turbomachine (10) selon la revendication 5, dans laquelle ladite au moins une grille (26) est située en amont de ladite écope (12) par référence à l'écoulement du flux secondaire (F2).

## Patentansprüche

1. Turbomaschine (10) für ein Luftfahrzeug, umfassend:
- eine Druckluft-Versorgungsvorrichtung (22), die dazu konfiguriert ist, dem Luftfahrzeug Druckluft zuzuführen,
- ein Kühlsystem (20) der dem Luftfahrzeug zugeführten Druckluft, wobei dieses Kühlsystem (20) ein Schöpfgerät (12) zur Entnahme von Luft in einer Strömungsader (8) einer Sekundärströmung (F2) umfasst, und
- ein Verwaltungssystem (15) eines Durchmessers eines Turbinengehäuses (16), wobei dieses System (15) mit Luft, die in der Ader (8) entnommen wird, versorgt wird und dazu konfiguriert ist, radiale Spiele zwischen diesem Gehäuse (16) und Spitzen der Turbinenrotorschaufeln zu bewältigen,
wobei das Verwaltungssystem (15) durch das Schöpfgerät (12) des Kühlsystems (20) mit Luft versorgt wird, wobei sich das Schöpfgerät (12) auf einem rohrförmigen Durchgangsarm (11) für Hilfsmittel eines dazwischen liegenden Gehäuses befindet und über eine Abzweigung mit zwei Versorgungskanälen (14, 17) des Verwaltungssystems (15) bzw. des Kühlsystems (20) verbunden ist, wobei sich diese Abzweigung im Arm (11) befindet.

2. Turbomaschine (10) nach Anspruch 1, wobei sich der Arm (11) stromabwärts einer ringförmigen Reihe von Leitschaufeln (23) des Sekundärstroms (28) befindet, wobei sich diese Leitschaufeln stromabwärts eines Gebläses (1) befinden.

3. Turbomaschine (10) nach Anspruch 2, wobei sich Angriffskanten (24) der Leitschaufeln (23) und eine Angriffskante (13) des Arms (11) im Wesentlichen in einer selben Ebene senkrecht zu einer Längsachse (LL) des Turbomaschine (10) befinden.

4. Turbomaschine (10) nach einem der Ansprüche 1 bis 3, wobei sich das Schöpfgerät (12) an einer Verbindungsstelle zwischen dem Arm (11) und einer ringförmigen inneren Wand (31), die eine Innenseite der Ader (8) definiert, befindet.

5. Turbomaschine (10) nach Anspruch 4, wobei die ringförmige innere Wand (31) mindestens ein Gitter (26) zum Auslassen von Abluft aus einem Kompressor umfasst.

6. Turbomaschine (10) nach Anspruch 5, wobei sich das mindestens eine Gitter (26) bezüglich der Strömung des Sekundärstroms (F2) stromaufwärts des Schöpfgeräts (12) befindet.

## Claims

1. Turbine engine (10) for an aircraft, comprising:
- a supply device (22) of compressed air configured to supply compressed air to said aircraft,
- a cooling system (20) of the compressed air supplied to the aircraft, this cooling system (20) comprising a scoop (12) for collecting air in a flow duct (8) of a secondary flow (F2), and
- a management system (15) of the diameter of a turbine casing (16), this system (15) being supplied with air collected from said duct (8) and being configured to control radial clearances between this casing (16) and turbine rotor vanes tips,
the management system (15) being supplied with air by said scoop (12) of the cooling system (20), the scoop (12) being located on a tubular arm (11) for the passage of auxiliaries of an intermediate casing and connected by a bypass to two respective supply channels (14, 17) of the management system (15) and of the cooling system (20), this bypass being located in said arm (11).

2. Turbine engine (10) according to claim 1, wherein said arm (11) is located downstream from an annular row of rectifiers (23) of the secondary flow (28), these rectifiers being located downstream from a fan (1).

3. Turbine engine (10) according to claim 2, wherein leading edges (24) of the rectifiers (23) and a leading edge (13) of the arm (11) are substantially located in the same plane perpendicular to a longitudinal axis (LL) of the turbine engine (10).

4. Turbine engine (10) according to one of claims 1 to 3, wherein the scoop (12) is located at a junction between said arm (11) and an inner annular wall (31) defining an inner face of said duct (8).

5. Turbine engine (10) according to claim 4, wherein said inner annular wall (31) comprises at least one discharge air outlet grille (26) of a compressor.

6. Turbine engine (10) according to claim 5, wherein said at least one grille (26) is located upstream from said scoop (12) with reference to the flow of the secondary flow (F2).
